# EUROPÄISCHE PATENTANMELDUNG

(11) **EP 0 803 187 A2**
(43) Veröffentlichungstag der Anmeldung: **29.10.1997**
(21) Anmeldenummer: 97101573.0
(22) Anmeldetag: 01.02.1997
(51) Int. Cl.: A01G 3/037

(54) **Werkzeug, insbesondere Astschere**

(30) Priorität: 27.04.1996 DE 19616949
(71) Anmelder: J. WAGNER GMBH, 88048 Friedrichshafen (DE)
(72) Erfinder: Jeltsch, Thomas, Dipl.-Ing. (FH), 88677 Markdorf (DE); Lützeler, Jörn, Dr.-Ing., 88718 Daisendorf (DE)
(74) Vertreter: Engelhardt, Guido, Dipl.-Ing.

(57) **Zusammenfassung**

Bei einer Astschere (1) mit zwei gegeneinander verstellbaren Klinken (11, 12), von denen eine Klinke (11) starr mit einem Gehäuse (2) verbunden und die andere Klinke (12) durch einen Elektromotor (5) über eine Gewindespindel (8), einer auf dieser angeordneten Gewindemutter (21) und einem mit dieser verbundenen Gestänge verstellbar ist, ist zur gesteuerten Betätigung des Elektromotors (5) ein Steuerschalter (41) vorgesehen, der zwei in den Stromkreis des Elektromotors (5) eingeschaltete Wechselschalter (42, 43) aufweist. Außerdem ist an der Spindelmutter (21) eine Steuerkulisse (51) angebracht, an der mit den Wechselschaltern (42, 43) zusammenwirkende Steuerkurven (53, 54, 55) angearbeitet sind.

Mit Hilfe des Steuerschalters (41) ist es möglich, die Verstellbewegungen der verschwenkbar gelagerten Klinke (12) jederzeit anzuhalten, fortzusetzen oder umzukehren, die Verstellbewegungen der Klinke (12) sind somit beliebig steuerbar. Außerdem ist gewährleistet, daß beim Loslassen des Steuerschalters (41) die Astschere (1) stets selbsttätig durch die Kraft des Elektromotors (5) geöffnet wird.

## Beschreibung

Die Erfindung bezieht sich auf ein Werkzeug, insbesondere Astschere oder dgl., mit zwei gegeneinander verstellbaren Klinken, von denen die eine Klinke starr mit einem Gehäuse verbunden und die andere Klinke durch einen in dem Gehäuse angeordneten Elektromotor über eine von diesem verdrehbare Gewindespindel, einer auf dieser angeordneten, drehfest abgestützten Gewindemutter und einem mit dieser verbundenen Gestänge verstellbar ist.

Durch die EP 0 291 431-A1 ist eine Astschere dieser Art bekannt. Die Translationsbewegungen der Spindelmutter sind hierbei durch eine elektrische oder elektronische Anschlagvorrichtung begrenzt, die unmittelbar oder mittelbar auf den Elektromotor einwirkt. Außerdem ist das Betätigungsorgan mit der Gewindespindel fest verbunden und folgt somit deren Vorschubbewegungen, so daß dieses unterschiedliche Betriebsstellungen einnimmt, und die elektrische Steueranordnung weist einen beweglichen magnetischen Steuerstößel, der durch das Betätigungsorgan beaufschlagt ist, sowie einen in der Nähe des magnetischen Steuerstößels fest fixierten Sensor auf. Abgesehen von dem erheblichen Bauaufwand, den diese Ausgestaltung erfordert, ist, auch bedingt durch die Lageänderungen des Betätigungsorgans, eine einfache Handhabung nicht gegeben.

Des weiteren ist durch die EP 0 118 350-A1 eine Gartenschere bekannt, bei der die verstellbare Klinke über ein Kabel trieblich mit einer auf der Abtriebswelle des Antriebsmotors angeordneten Scheibe verbunden ist. Zum Abschalten des Elektromotors bei geöffnetem Schnittmesser ist die Scheibe mit einer Steuerkurve versehen, außerdem ist in dem Gehäuse ein Umschalter eingebaut, der durch die verschwenkbare Klinke betätigbar ist, so daß bei geschlossener Schere sofort eine Rückwärtsdrehung des Elektromotors eingeleitet wird. Die Klinken können somit keine Zwischenstellungen einnehmen, die Klinken werden vielmehr durch die Kraft des Antriebsmotors zugestellt und durch die Kraft einer Feder geöffnet. Auch ist bei einem Schneidevorgang jeweils die Kraft der Rückstellfeder zu überwinden und diese ist zu spannen, der Antriebsmotor ist daher mit einer entsprechenden Antriebsleistung auszustatten. Abgesehen davon, daß die Rückstellfeder ein Verschleißteil ist und brechen kann, ist deren Kraft mitunter, insbesondere bei dickeren abzuschneidenden Ästen zum Öffnen der Schere nicht ausreichend. Die bei dieser Schere vorgeseshene Betätigungs- und Übertragungsorgange ermöglichen somit keine optimale Handhabung.

Aufgabe der Erfindung ist es daher, den bei dem Werkzeug der vorgenannten Gattung vorgesehenen Elektromotor in der Weise steuern zu können, daß die Verstellbewegung der verstellbaren Klinke in jedem Öffnungsbereich angehalten und gegebenenfalls auch umgekehrt werden kann. Die Verstellbewegung der verstellbaren Klinke soll demnach beliebig gesteuert werden können, so daß jederzeit eine Anpassung an die vorzunehmenden Schnittvorgänge möglich ist. Außerdem soll die Kraft des Antriebsmotors sowohl bei einem Schneidevorgang als auch beim Öffnen der Schere voll nutzbar sein, so daß Betriebsstörungen selbst beim Durchtrennen dickerer Äste nahezu ausgeschlossen sind. Bei einfachem konstruktiven Aufbau und leichter Handhabung soll das Arbeiten mit einem solchen Werkzeug erleichtert werden.

Gemäß der Erfindung wird dies bei einem Werkzeug, insbesondere einer Astschere der vorgenannten Ausgestaltung, dadurch erreicht, daß zur gesteuerten Betätigung des Elektromotors ein um eine senkrecht zu der Gewindespindel verlaufende Achse in dem Gehäuse kippbar oder in Längsrichtung des Gehäuses begrenzt verschiebbar gelagerter Steuerschalter vorgesehen ist, der zwei mit seitlichem Abstand zueinander angeordnete und in den Stromkreis des Elektromotors eingeschaltete Wechselschalter aufweist, und daß an der Spindelmutter eine Steuerkulisse angebracht ist, an der mit den Verstellgliedern der Wechselschalter zusammenwirkende Steuerkurven angearbeitet sind.

Zweckmäßig ist es hierbei, wenn der Steuerschalter entgegen der Kraft einer Feder selbsttätig in Schaltpositionen verstellbar ist.

Nach einer bevorzugten Ausgestaltung kann die an der Spindelmutter angebrachte Steuerkulisse durch eine achsparallel zur Gewindespindel abstehende Leiste gebildet sein, in die eine in Richtung des kippbar gelagerten Steuerschalters offene Ausnehmung mit vorzugsweise zueinander geneigt verlaufenden Seitenwänden als Steuerkurve eingearbeitet ist, wobei der seitliche Abstand zwischen den beiden Verstellgliedern der Wechselschalter größer bemessen sein sollte als die Länge der in der Leiste vorgesehenen Ausnehmung und die auf den kippbar gelagerten Steuerschalter einwirkende Feder mit Abstand zu dem diesen tragenden Bolzen angeordnet und an dem Gehäuse abgestützt sein sollte.

Nach einer andersartigen Ausführung kann die an der Spindelmutter angebrachte Steuerkulisse aus einer Kufe bestehen, die in den beiden Endbereichen in Richtung des Steuerschalters geneigte Schrägflächen aufweist und mit diesen die Steuerkurve bildet. Auch hierbei sollte der Abstand zwischen den beiden Verstellgliedern der Wechselschalter größer bemessen sein als die wirksame Länge der Kufe und die auf den verschiebbar gelagerten Steuerschalter einwirkende Federn sollte in dessen Verstellrichtung angeordnet und an dem Gehäuse abgestützt sein.

Vorteilhaft ist es, zur Erhöhung der Betriebssicherheit ferner, den Steuerschalter in einer Schaltposition, vorzugsweise in der den geschlossenen Klinken zugeordneten Schaltposition, mittels eines Schiebers oder dgl. mit einem an dem Gehäuse angebrachten Bolzen fest zu verbinden.

Wird ein Werkzeug, insbesondere eine Astschere, gemäß der Erfindung ausgebildet, so ist es mit Hilfe des Steuerschalters auf einfache Weise möglich, die Verstellbewegung der verschwenkbar gelagerten Klinke jederzeit anzuhalten, fortzusetzen oder umzukehren, die Verstellbewegungen dieser Klinke sind somit beliebig steuerbar. Außerdem ist gewährleistet, daß beim Loslassen des Steuerschalters die Astschere stets selbsttätig geöffnet wird, und zwar durch die Kraft des Elektromotors, die Unfallgefahr wird dadurch reduziert, und es ist nahezu ausgeschlossen, daß sich die Klinke in einem Ast verhakt und die Schere nicht geöffnet wird.

Der Bauaufwand, mit dem dies zu bewerkstelligen ist, ist äußerst gering, da lediglich ein mit Wechselschaltern bestückter kippbar oder verschiebbar gelagerter Steuerschalter sowie eine Steuerkulisse vorzusehen sind, um die jeweils gewünschten Verstellbewegungen auszulösen. Fehlbetätigungen sind somit bei einfacher Handhabung des Steuerschalters zuverlässig vermieden, auch ist eine hohe Betriebssicherheit der vorschlagsgemäß ausgebildeten Astschere gegeben.

In der Zeichnung ist ein Ausführungsbeispiel einer gemäß der Erfindung ausgebildeten Astschere dargestellt, das nachfolgend im einzelnen erläutert ist. Hierbei zeigt:
- Figur 1: die Astschere, teilweise in einem Axialschnitt und teilweise in Ansicht,
- Figur 2: einen Schnitt nach der Linie II - II der Figur 1,
- Figur 3: einen Schnitt nach der Linie III - III der Figur ,
- Figuren 4 bis 8: den bei der Astschere nach Figur 1 vorgesehenen Steuerschalter in unterschiedlichen Schaltpositionen und vereinfachter Darstellung
sowie
- Figuren 9 bis 13: einen verschiebbar gelagerten bei der Astschere nach Figur 1 verwendbaren Steuerschalter, ebenfalls in unterschiedlichen Schaltpositionen und vereinfachten Darstellungen.

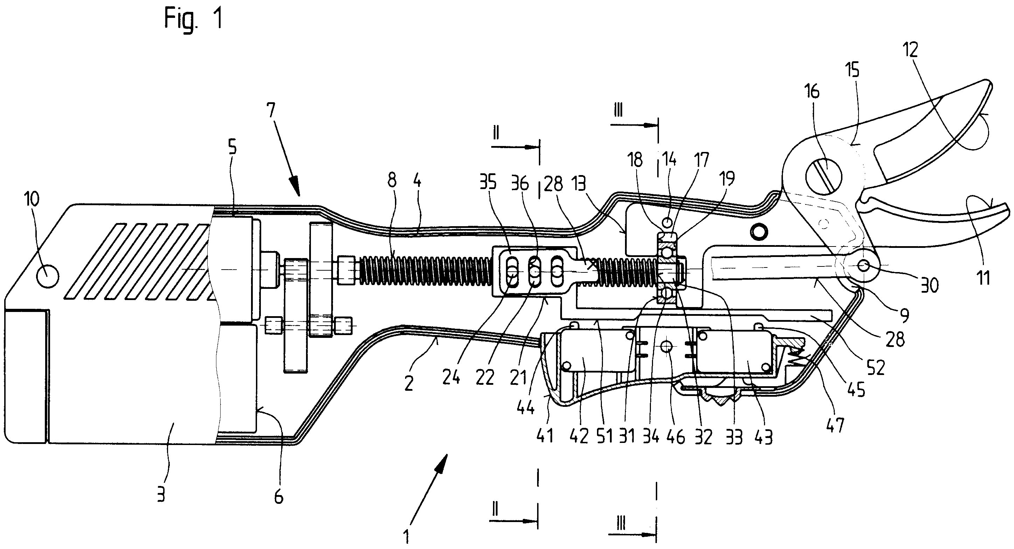

Die in Figur 1 dargestellte und mit 1 bezeichnete Astschere besteht im wesentlichen aus zwei aus einem zweischaligen Gehäuse 2 herausragende gegeneinander verstellbare Klingen 11 und 12, von denen die Klinke 11 starr mit dem Gehäuse 2 verbunden und die Klinke 12 mittels eines Elektromotors 5 verschwenkbar ist. Der von einer Batterie 6 gespeiste Elektromotor 5 ist dazu über ein Reduktionsgetriebe 7, eine Gewindespindel 8 sowie einer durch diese verschiebbaren Spindelmutter 21 und einem aus Hebeln 28, 29 gebildeten Gestänge trieblich mit der Klinke 12 verbunden.

Das Gehäuse 2 besteht aus zwei Kunststoffschalen 3 und 4, die auf der dem Elektromotor 5 gegenüberliegenden Seite jeweils mit einer Freisparung 9 versehen sind, durch die die Klinken 11 und 12 herausragen. Mittels Schrauben 10 sind die Halbschalen 3 und 4 fest miteinander verbunden.

Um die bei einem Schneidvorgang auftretenden Schnittkräfte innerhalb der daran beteiligten Bauteile abstützen zu können, so daß diese Kräfte nicht auf das Gehäuse 2 übertragen werden, ist die Klinke 11 mit einem in Richtung der Gewindespindel 8 abstehenden Ansatzstück 13 versehen, das mittels Bohrungen 14 durchgreifender Schrauben an der Halbschale 4 befestigt ist. Außerdem weist das Ansatzstück 13 ein Lagerauge 15 auf, in dem mittels eines Bolzens 16 die Klinke 12 verschwenkbar gehalten ist. Im Bereich der Gewindespindel 8 ist in das Ansatzstück 13 des weiteren eine Ausnehmung 17 eingearbeitet, und auf der Gewindespindel 8 ist ein Wälzlager 31 axial unverschiebbar angeordnet, das in der Ausnehmung 17 in Achsrichtung abgestützt ist. Die Gewindespindel 8 ist dazu mit einem abgesetzten Bolzen 32 versehen, auf den das Wälzlager 31 aufgesetzt ist. Mittels eines in dem Bolzen 32 gehaltenen Sprengringes 33 einerseits und einer an der Gewindespindel 8 angearbeiteten Anschlagfläche 34 ist das Wälzlager 8 auf dieser fixiert, außerdem sind die einander zugekehrten Flächen der Ausnehmung 17 als Anlageflächen 18 und 19 für das Wälzlager 31 ausgebildet. Auf die Gewindespindel 8 einwirkende Kräfte können somit über das Wälzlager 31 auf das Ansatzstück 13 übertragen werden.

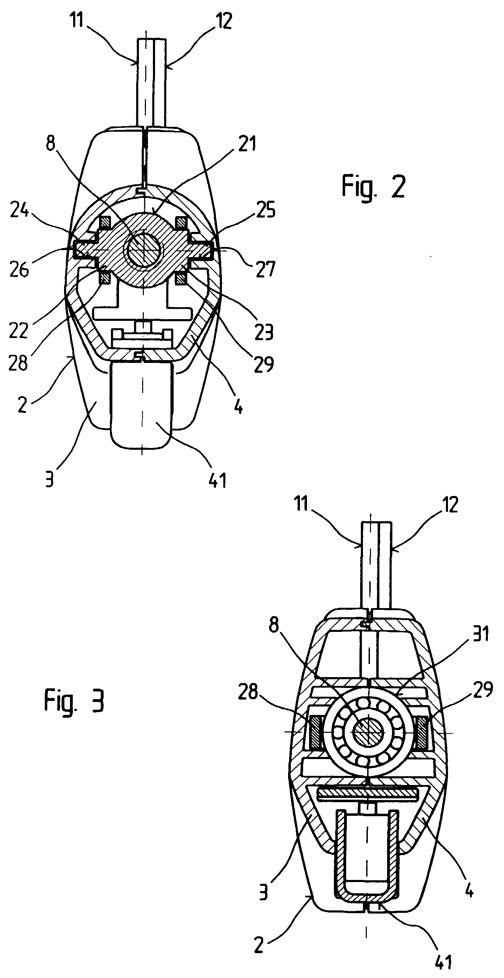

Die Gewindemutter 21 ist, wie dies insbesondere der Figur 2 zu entnehmen ist, mittels zweier seitlich abstehender Bolzen 24 und 25 in in die Halbschalen 3 und 4 des Gehäuses 2 eingeformter Nuten 26 und 27 verdrehfest aber axial verschiebbar geführt. Die Bolzen 24 und 25 stehen bei dem gezeigten Ausführungsbeispiel von Nocken 22 bzw. 23 ab, an denen die Hebel 28 und 29 mit einem Ende angelenkt sind, die dazu jeweils als mit Ausnehmungen 36 zur Aufnahme der Nocken 22 bzw. 23 versehene Laschen 35 ausgebildet sind. Mit dem anderen Ende sind die Hebel 28 und 29 mittels eines Gelenkbolzens 30 mit der verstellbaren Klinke 12 trieblich verbunden.

Wird mit Hilfe eines Steuerschalters 41 der Elektromotor 5 eingeschaltet und wird die Gewindespindel 8 durch diesen derart verdreht, daß die Gewindemutter 21 nach links verstellt wird, so wird über die mit dieser trieblich verbundenen Hebel 28 und 29 die Klinke 12 um den Bolzen 16 verschwenkt, so daß ein zwischen den Klinken 11 und 12 befindlicher Ast abgeschert wird. Durch eine Drehrichtungsumkehrung des Elektromotors 5 werden die Klinken 11 und 12 wiederum in die dargestellte Betriebsstellung zurückgeführt.

Wird mit der Astschere 1 ein Teil durchtrennt, so ist dazu die Gewindemutter 21, um die Klinke 12 in Richtung der feststehenden Klinke 11 zu bewegen, durch die von dem Elektromotor 5 angetriebene Gewindespindel 8 nach links verschoben. Die dabei auftretende Zugkraft wird über das Wälzlager 31 an der Anlagefläche 19 abgestützt. Gleichzeitig wirkt auf das Ansatzstück 13 aber auch eine entgegengerichtete Kraft ein, die durch das Verschwenken der Klinke 12 ausgelöst und über den Bolzen 16 auf das Ansatzstück 13 übertragen wird. Und da diese Kräfte nahezu gleich groß, aber entgegengesetzt zueinander gerichtet sind, ist ein geschlossener Kraftfluß gegeben, so daß das Gehäuse 2 nahezu frei von durch einen Schnittvorgang bedingte Beanspruchungen ist.

Der Steuerschalter 41 weist, wie dies insbesondere der Figur 1 sowie den Figuren 4 bis 9 zu entnehmen ist, zwei Wechselschalter 42 und 43 auf, deren Verstellglieder 44 und 45 mit einer Steuerkulisse 51 zusammenwirken, die an der Gewindemutter 21 angebracht ist. Die Steuerkulisse 51 ist durch eine parallel zur Gewindespindel 8 verlaufende Leiste 52 gebildet, in die eine in Richtung des Steuerschalters 41 offene Ausnehmung 53 eingearbeitet ist, deren Seitenwände 54 und 55 zu einander geneigt verlaufen. Mittels eines Bolzens 46 ist der Steuerschalter 41 um eine senkrecht zu der Gewindespindel 8 gerichtete Achse kippbar in dem Gehäuse 2 entgegen der Kraft einer Feder 47, die sich an dem Gehäuse 2 abstützt, gelagert, so daß mittels der Wechselschalter 42 und 43 im Zusammenwirken mit der Kulisse 51 der Elektromotor 5 wahlweise gesteuert werden kann.

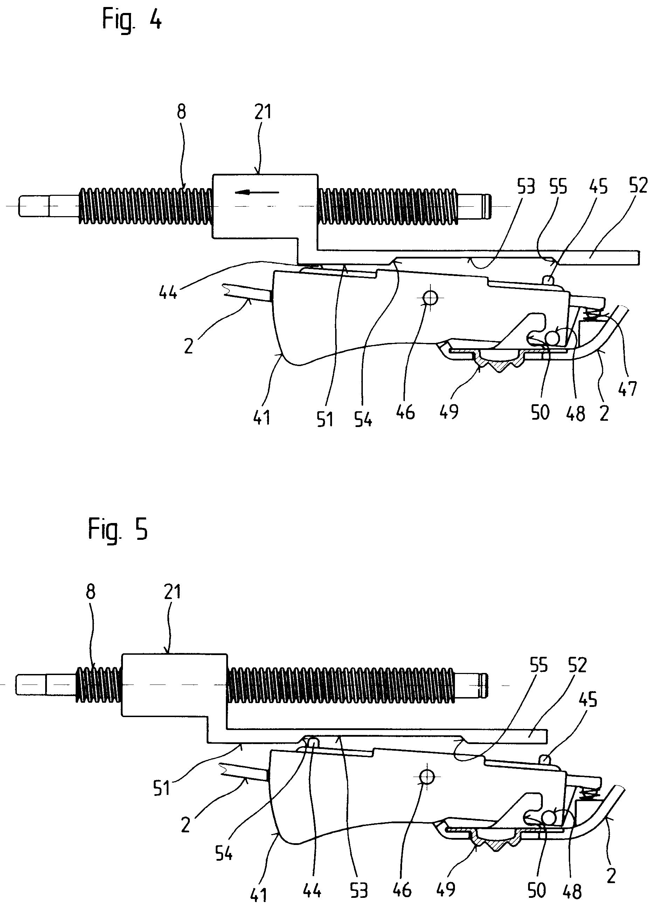

In Figur 1 ist der Steuerschalter 41 in einer Neutralstellung dargestellt. Wird, ausgehend von dieser Neutralstellung, wie dies in Figur 4 gezeigt ist, von Hand Druck auf den Steuerschalter 41 ausgeübt und dieser um den Bolzen 46 gekippt, so wird über den Wechselschalter 42, da dessen Verstellglied 44 betätigt wird, der Elektromotor 5 derart verdreht, daß die Gewindemutter 21 und damit auch die Hebel 28, 29 nach links verschoben werden und die Klinke 12 in Richtung der Klinke 11 verschwenkt wird.

Zusammen mit der Gewindemutter 21 wird aber auch die Steuerkulisse 51 und somit die Leiste 52 nach links verschoben. Über die Seitenfläche 54 der Ausnehmung 53 wird somit, sobald die Steuerkulisse 51 eine entsprechende Lage erreicht, das Verstellglied 44 des Wechselschalters 42 in die Ausnehmung 53, wie dies in Figur 5 gezeigt ist, eingeführt, so daß der Wechselschalter 42 nicht mehr betätigt ist und der Elektromotor 5 selbsttätig ausgeschaltet wird. Der Schnittvorgang ist somit beendet und die Astschere 1 ist geschlossen.

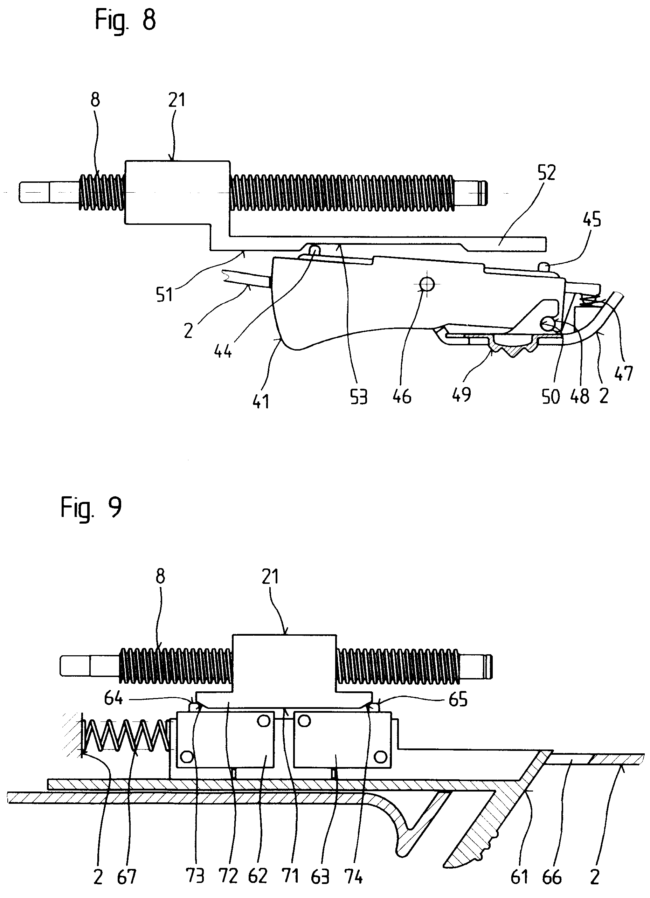

In dieser Betriebsstellung kann gemäß Figur 8 der Steuerschalter 41 arretiert und somit die Astschere 1 geschlossen gehalten werden. Dies ist mittels eines an dem Gehäuse 2 verstellbar angebrachten Schiebers 49 zu bewerkstelligen, der eine offene einem an dem Steuerschalter 41 befestigten Bolzen 48 zugeordnete Ausnehmung 50 aufweist. Wird der Schieber 49, wie in Figur 8 dargestellt, verschoben, ist der Umschalter 41 über den Schieber 49 mit dem Bolzen 48 und somit fest mit dem Gehäuse 2 verbunden.

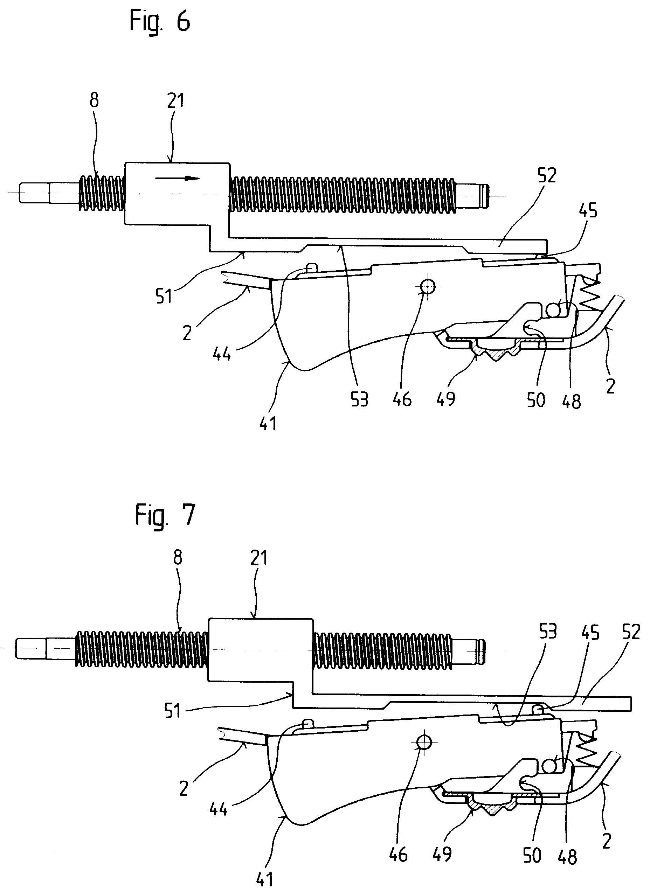

Beim Betätigen des Steuerschalters 41 wurde die an diesem und dem Gehäuse 2 abgestützte Feder 47 gespannt. Wird der Steuerschalter 41, ausgehend von der in Figur 5 gezeigten Betriebsstellung, losgelassen bzw. wird der Schieber 49 nach links zurückgeschoben, so wird der Steuerschalter 41 durch die Kraft der gespannten Feder 47 selbsttätig um den Bolzen 46 in die in Figur 6 dargestellte Lage gekippt. Dies bedeutet, daß der Wechselschalter 43, da dessen Verstellglied 45 an der Steuerkulisse 51 anliegt, an den Stromkreis des Elektromotors 5 angeschlossen ist und dieser umgepolt wird. Die Gewindespindel 8 wird in dieser Schaltposititon des Steuerschalters 41 derart verdreht daß die Gewindemutter 41 und mit dieser auch die Hebel 28, 29 nach rechts verschoben werden, die Klinge 12 wird dadurch geöffnet, und zwar so lange, bis das Verstellglied 45 des Wechselschalters 43 über die geneigte Seitenwand 55 in die Ausnehmung 53 der Steuerkulisse 51 eingeführt ist. In dieser in Figur 7 gezeigten Betriebsstellung wird der Elektromotor 5 wiederum stillgesetzt. Die Klinken 11 und 12 der Astschere 1 nehmen die geöffnete Betriebsstellung ein.

Durch wahlweises Betätigen der Wechselschalter 42 oder 43 kann somit die Gewindemutter 21 beliebig nach links zum vollständigen oder teilweisen Öffnen oder nach rechts zum vollständigen oder teilweisen Schließen der Astschere 1 durch den Elektromotor 5 verschoben werden, beim Loslassen des Steuerschalters 41 öffnet die Astschere 1 aber sofort selbsttätig. Die Betriebsstellung der Astschere 1 kann demnach problemlos an die jeweils vorzunehmenden Arbeiten bzw. an die Stärke der abzuschneidenden Äste angepaßt werden, Unfälle und Fehlbetätigungen werden somit vermieden.

Bei der Ausgestaltung nach den Figuren 9 bis 13 ist der mit Wechselschaltern 62 und 63 versehene Steuerschalter 61 verschiebbar in einer Ausnehmung 66 des Gehäuses 2 der Astschere 1 eingesetzt. Die Verstellglieder 64 und 65 der Wechselschalter 62 und 63 wirken wechselweise mit einer Steuerkulisse 71 zusammen, die als an den Enden mit Schrägflächen 73 und 74 versehene Kufe 72 ausgebildet ist. Zur selbstätigen Rückführung des Steuerschalters 61 dient eine Feder 77, die an dem Gehäuse 2 abgestützt ist und in Längsrichtung auf den Steuerschalter 61 einwirkt.

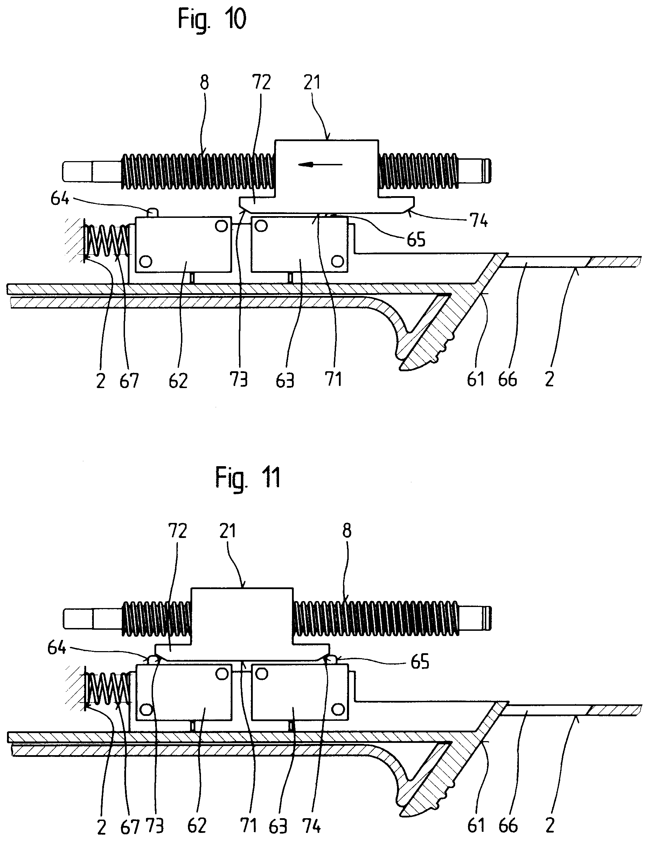

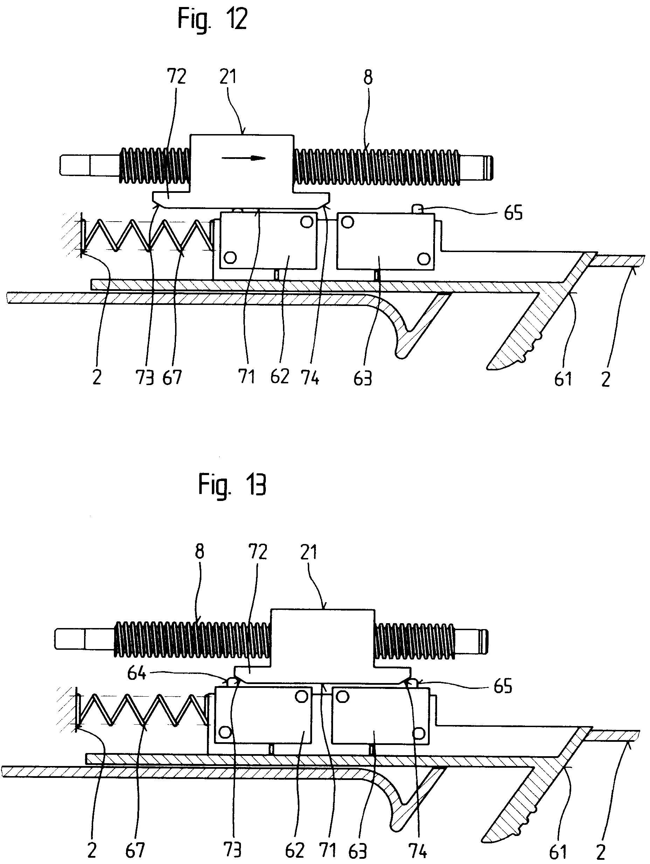

In Figur 10 ist wiederum eine Neutralstellung dargestellt. Wird der Steuerschalter 61 gemaß Figur 11 nach links verstellt, so wird der Wechselschalter 63 betätigt und die Gewindemutter 21 wird, um die Astschere 1 zu öffnen, in die in Figur 11 gezeigte Position verschoben. Durch Verschieben des Steuerschalters 61 nach rechts, wie dies der Figur 12 zu entnehmen ist, wird über den Wechselschalter 62 dagegen der Elektromotor 5 derart angetrieben, daß die Gewindemutter 21 durch die Gewindespindel 8 nach rechts bis in die in Figur 13 dargestellte Lage verschoben und die Klinken 11 und 12 der Astschere 1 geschlossen werden.

Selbstverständlich kann auch bei dieser Ausgestaltung mit Hilfe des Steuerschalters 61 die Verstellbewegung der Gewindemutter 21 jederzeit unterbrochen werden, der Bewegungsablauf somit stillgesetzt oder umgekehrt werden. Auch ist durch die auf den Steuerschalter 61 einwirkende Feder 67 gewährleistet, daß die Astschere 1, sobald der Steuerschalter 61 losgelassen wird, stets selbsttätig geöffnet wird.

## Patentansprüche

1. Werkzeug, insbesondere Astschere (1) oder dgl., mit zwei gegeneinander verstellbaren Klinken (11, 12), von denen die eine Klinke (11) starr mit einem Gehäuse (2) verbunden und die andere Klinke (12) durch einen in dem Gehäuse (2) angeordneten Elektromotor (5) über eine von diesem verdrehbare Gewindespindel (8), einer auf dieser angeordneten drehfest abgestützten Gewindemutter (21) und einem mit dieser verbundenen Gestänge (28, 29) verstellbar ist,
**dadurch gekennzeichnet,**
daß zur gesteuerten Betätigung des Elektromotors (5) ein um einen senkrecht zu der Gewindespindel (8) verlaufenden Bolzen (46) in dem Gehäuse (2) kippbar oder in Längsrichtung des Gehäuses (2) begrenzt verschiebbar gelagerter Steuerschalter (41; 61) vorgesehen ist, der zwei mit seitlichem Abstand zueinander angeordnete und in den Stromkreis des Elektromotors (5) eingeschaltete Wechselschalter (42, 43; 62, 63) aufweist, und daß an der Spindelmutter (21) eine Steuerkulisse (51; 71) angebracht ist, an der mit den Verstellgliedern (44, 45; 64, 65) der Wechselschalter (42, 43; 62, 63) zusammenwirkende Steuerkurven (53, 54, 55; 72, 73, 74) angearbeitet sind.

2. Werkzeug nach Anspruch 1,
**dadurch gekennzeichnet,**
daß der Steuerschalter (41; 61) entgegen der Kraft einer Feder (47; 67) selbsttätig in Schaltpositionen verstellbar ist.

3. Werkzeug nach Anspruch 1 oder 2,
**dadurch gekennzeichnet,**
daß die an der Spindelmutter (21) angebrachte Steuerkulisse (51) durch eine achsparallel zur Gewindespindel abstehende Leiste (52) gebildet ist, in die eine in Richtung des kippbar gelagerten Steuerschalters (41) offene Ausnehmung (53) mit vorzugsweise zueinander geneigt verlaufenden Seitenwänden (54, 55) als Steuerkurve eingearbeitt ist.

4. Werkzeug nach Anspruch 3,
**dadurch gekennzeichnet,**
daß der seitliche Abstand zwischen den beiden Verstellgliedern (44, 45) der Wechselschalter (42, 43) größer bemessen ist als die Länge der in der Leiste (52) vorgesehenen Ausnehmung (53).

5. Werkzeug nach Anspruch 3 oder 4,
**dadurch gekennzeichnet,**
daß die auf den kippbar gelagerten Steuerschalter (41) einwirkende Feder (47) mit Abstand zu den diesen tragenden Bolzen (46) angeordnet und an dem Gehäuse (2)abgestützt ist.

6. Werkzeug nach Anspruch 1 oder 2,
**dadurch gekennzeichnet,**
daß die an der Spindelmutter (21) angebrachte Steuerkulisse (71) aus einer Kufe (72) besteht, die in den beiden Endbereichen in Richtung des Steuerschalters (61) geneigte Schrägflächen (73, 74) aufweist und mit diesen die Steuerkurve bildet.

7. Werkzeug nach Anspruch 6,
**dadurch gekennzeichnet,**
daß der Abstand zwischen den beiden Verstellgliedern (64, 65) der Wechselschalter (62, 63) größer bemessen ist als die wirksame Länge der Kufe (62).

8. Werkzeug nach Anspruch 6 oder 7,
**dadurch gekennzeichnet,**
daß die auf den verschiebbar gelagerten Steuerschalter (61) einwirkende Feder (67) in dessen Verstellrichtung angeordnet und an dem Gehäuse (2) abgestützt ist.

9. Werkzeug nach einem oder mehreren der Ansprüche 1 bis 8,
**dadurch gekennzeichnet,**
daß der Steuerschalter (41) in einer Schaltposition, vorzugsweise in der den geschlossenen Klinken (11, 12) zugeordneten Schaltposition, mittels eines Schiebers (49) oder dgl. mit einem an dem Gehäuse (2) angebrachten Bolzen (48) fest verbindbar ist.
